# EUROPEAN PATENT SPECIFICATION

(11) **EP 0 889 766 B1**
(45) Date of publication and mention of the grant of the patent: **05.12.2001**
(21) Application number: 97901095.6
(22) Date of filing: 16.01.1997
(51) Int. Cl.: B23D 15/04

(54) **CUTTING DEVICE FOR CUTTING A METAL BAR INTO THIN PLATE-LIKE PIECES**
STABSCHNEIDVORRICHTUNG ZUR ERZEUGUNG VON SCHEIBEN
DISPOSITIF DE COUPE POUR DECOUPER UNE BARRE METALLIQUE EN PIECES MINCES EN PLAQUE

(30) Priority: 19.03.1996 FI 961265
(43) Date of publication of application: 13.01.1999
(73) Proprietor: Rondex Oy Ltd., 00561 Helsinki (FI)
(72) Inventor: PIISPANEN, Ari, FIN-53150 Lappeenranta (FI); KÄSSI, Timo, . (FI)
(74) Representative: Helino, Timo Kalervo
(86) International application number: FI9700021
(87) International publication number: WO9734723

(56) References cited:
- CH-B- 477 252
- DE-A- 2 351 277
- DE-C- 253 388
- DERWENT'S ABSTRACT, No. B1133C/05, Week 8005; & SU,A,662 282 (GRIGOREV V Z), 15 May 1979.
- PATENT ABSTRACTS OF JAPAN, Vol. 10, No. 388, M-549; & JP,A,61 178 111 (TOYO RADIATOR K.K.), 9 August 1986.

## Description

The present invention relates to a cutting device for cutting a rough cast bar, preferably an aluminium bar, into thin plate-like pieces.

For example, Finnish patent application 954161 proposes a method for cutting a rough-cast non-rolled aluminium bar by means of a cutter into disc-shaped pieces. However, the specification does not give a detailed description of this cutting method or the equipment used. One way is to cut metal bars with a guillotine type cutting device. However, such a device involves several problems. When thin pieces of a thickness e.g. below 20 mm, preferably below 10 mm, even below 1 mm, are to be cut from a metal bar, the discoid piece to be cut off will be easily deformed and does not substantially preserve the cross-sectional form of the bar.

Another problem is how to ensure that the piece to be cut off will be of uniform thickness. As the metal being cut is a relatively stiff material, it tends to deflect the cutter even if the latter is properly secured and has a rigid structure, resulting in variations in the thickness of the piece cut off. On the other hand, it is not possible to use very thick and rigid cutters for this purpose, because the bar to be cut would bend and deform too much under the cutter.

Further problems result from the metal to be cut being torn at the final stage of the cutting action, leading to changes in the structure of the material at the edge of the disc cut off, which is why the edge has to be separately cut off in many applications in which such discs are used.

The object of the present invention is to eliminate the drawbacks mentioned above. A specific object of the invention is to produce a new type of cutting device which makes it easy to cut metal bars and above all rough-cast aluminium bars into thin pieces of uniform thickness and quality.

As for the features characteristic of the invention, reference is made to the claims.

The cutting device of the invention comprises a supporting frame which supports the metal bar to be cut, and a cutter plate substantially transverse to the metal bar, designed to perform the cutting. The cutter plate has a straight and planar inner surface oriented in a direction parallel to the cutting face at the end of the metal bar, an outer surface on the side facing towards the piece to be cut off, and a cutter connecting the inner and outer surfaces and provided with a cutting edge. According to the invention, the cutting edge of the cutter, over the entire cutting width of the cutter plate, is at a distance from the plane determined by the inner surface of the cutter plate towards the outer surface, so that a connecting surface deviating from the direction of the inner surface is formed between the planar inner surface and the cutting edge of the cutter.

The cutting edge of the cutter may be as sharp as possible or a relatively sharp edge or also a rounded surface. Similarly, the connecting surface between the cutting edge and the inner surface may be a straight or a curved surface or suitably partly straight and partly curved. The outer surface is directed obliquely outwards away from the inner surface so that: the thickness of the cutter plate increases from the cutting edge upwards. The outer surface may start from the edge in a straight or rounded form and, depending on the case, it may continue further either as a straight surface or as a curved surface with a curvature in either direction.

The outer surface of the cutter plate is preferably provided with a protrusion at a distance from the edge. This protrusion turns the piece to be cut off from the bar outwards from the cutter plate more effectively than the oblique cutter structure of increasing thickness alone does. The protrusion is located at a distance from the edge equalling less than ten times the thickness of the piece to be cut off; preferably this distance is about 3 - 5 times the thickness of the piece to be cut off. The protrusion may consist of e.g. a bulge with a regular outward curvature in the outer surface.

The connecting surface and the outer surface of the cutter plate are preferably so designed and shaped in relation to each other that, during cutting, the metal bar applies to the connecting surface a force perpendicular to the direction of the inner surface and having a magnitude below that of the opposite force applied by the metal bar to the outer surface of the cutter plate. The force component applied to the outer surface of the cutter plate, acting in a direction perpendicular to the movement of the cutter plate, is at most 20 % larger than the opposite force component applied to the connecting surface. In a particularly preferred case, the difference between the magnitudes of these forces is about 5 %.

The cutting device preferably comprises a back support parallel to the inner surface of the cutter plate, the inner surface of the cutter plate being pressed against said back support with a force equal to the difference between the above-mentioned forces.

The cutting device of the invention preferably comprises a cutting boss forming an extension of the supporting frame, located under the piece to be cut off from the metal bar, i.e. on the opposite side of the metal bar relative to the cutter as seen before the cutting operation, which cutting boss prevents the metal bar from being deformed and the piece from being torn off from the metal bar especially at the final phase of the cutting action.

In an embodiment, the cutting boss is fixedly mounted with respect to the supporting frame and located at distance below the supporting surface determined by the supporting frame, so that, at the end of the cutting action, the cutter can advance downward past the supporting surface determined by the supporting frame against the cutting boss at the end of the supporting frame.

In another embodiment, the cutting boss is capable of springing motion in the direction of movement of the cutter plate, in which case the cutting boss can be at the level of the supporting surface of the supporting frame when in its rest position while suitably yielding at the final phase of the cutting action. Another possibility is that the cutting boss is located somewhat below the lower surface of the metal bar even in the rest position.

The cutting boss is preferably located at a distance below the cutting surface that roughly corresponds to the depth of cut or the thickness of the disc to be cut off. In this case it will permit free cutting movement of the cutter while effectively preventing the metal structure from being torn at the final stage of the cutting action.

In an embodiment of the invention, the cutting device comprises turning elements for rotating the metal bar and the cutter plate with respect to each other during the cutting. This can be implemented by rotating the metal bar to be cut. Another possibility is to mount the cutter e.g. on a suitable frame around the metal bar and have it rotate around the stationary metal bar. It is also possible to have both the cutter and the metal bar rotate in opposite directions during the cutting.

The cutting device of the invention has significant advantages as compared with prior art. By means of the cutting device, especially rough-cast aluminium bars can be effectively cut into thin plates or discs of exactly uniform thickness. The cutting device also makes it easy to cut copper bars e.g. for different applications in the electrical industry and brass bars e.g. for the manufacture of shells, bushes, sleeves, etc. During the cutting, the edge areas of the material are not broken or changed in structure, so the entire blank cut off from the bar can be utilized in further processing. Thus, it is possible to produce blanks from the rough-cast bar for further processing, without material losses whatsoever.

In the following, the invention is described in detail by referring to the attached drawings, in which
Fig. 1 presents a diagrammatic side view of a cutting device according to an embodiment of the invention,
Fig. 2 presents an end view of the device in Fig. 1,
Fig. 3 represents an alternative structure of a detail in the device,

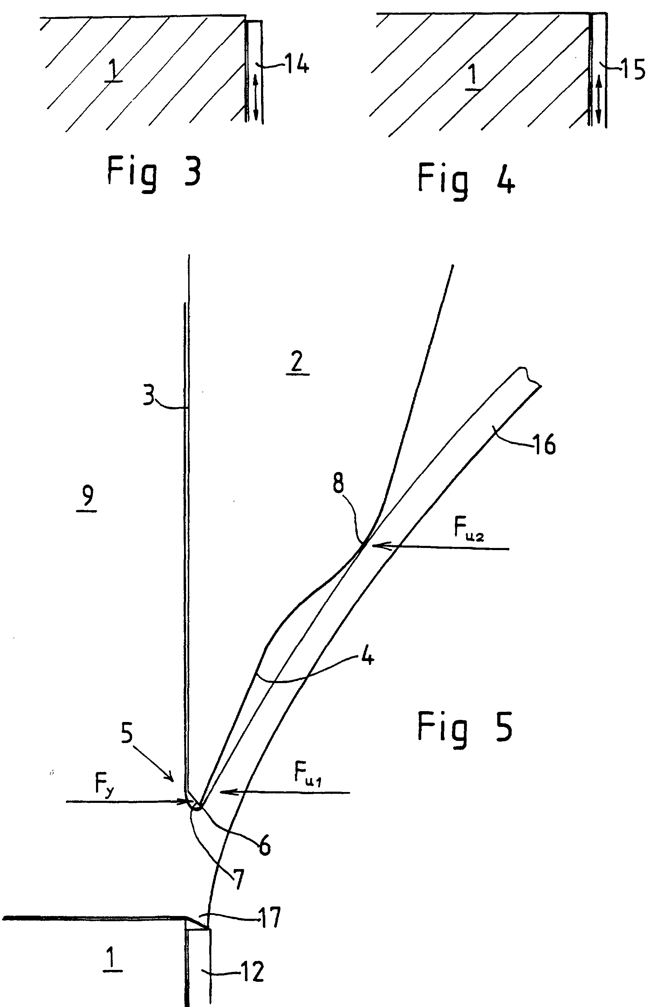

Fig. 3 represents another alternative structure of a detail in the device,
Fig. 5 represents the cutting action with a cutting device as provided by an embodiment of the present invention,

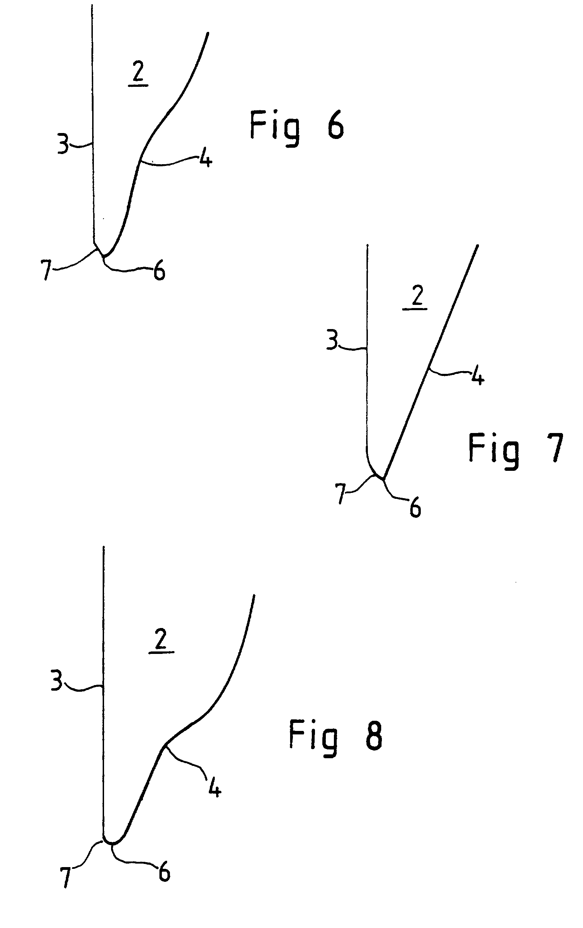

Fig. 6 represents another cutter as may be used in another embodiment of the invention,
Fig. 7 represents a third cutter which may be employed in a further embodiment of the invention, and
Fig. 8 represents a fourth cutter which may be employed in a further embodiment of the invention.

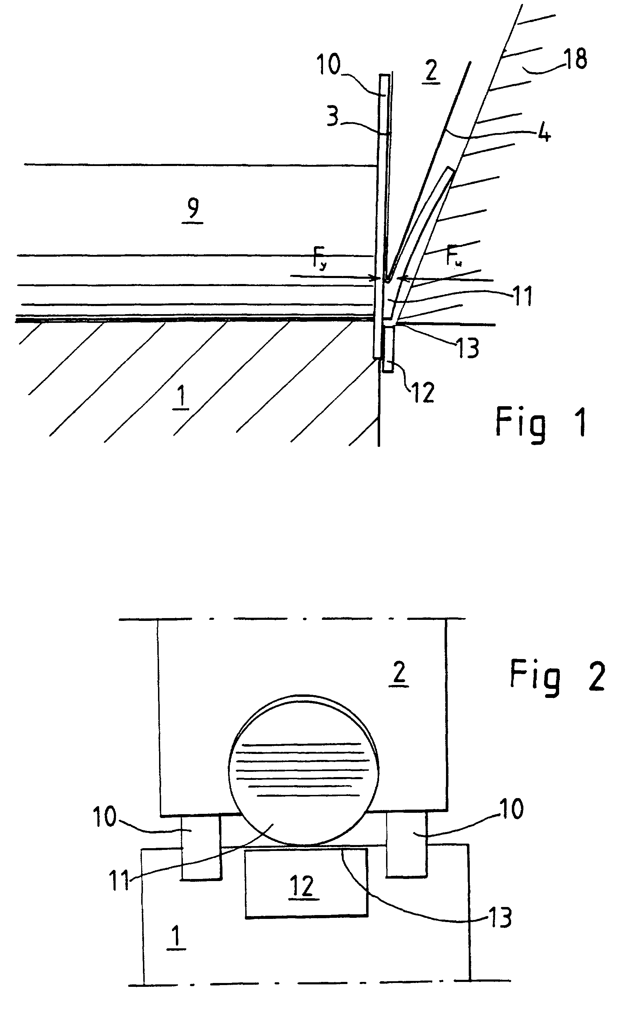

The cutting device represented by the diagrams in Fig. 1 and 2 comprises a supporting frame 1, on which a rough-cast bar 9 rests. In addition, the cutting device comprises a cutter plate 2 movable in the direction of the cross-section of the rough-cast bar. The cutter plate 2 is guided by a back support 10, which forms a sliding surface along which the cutter plate can be moved back and forth with the inner surface of the cutter plate against the back support.

The rough-cast bar 9 to be cut mainly rests on the supporting frame 1 while only the piece 11 to be cut off its end extends beyond the edge of the supporting frame 1. However, below the piece 11 to be cut off there is a cutting boss 12, which in the embodiment represented by Fig. 1 and 2 is immovable with regard to the supporting frame 1. Moreover, the upper surface 13 of the cutting boss lies somewhat lower than the upper surface of the supporting frame 1, i.e. than the surface supporting the rough-cast bar. Thus, at the final stage of the cutting action, the cutter 5 of the cutter plate 2 is able to move down past the edge of the supporting frame to a level below the plane determined by the supporting frame edge to ensure that the piece to be cut off is completely and reliably detached from the rough-cast bar.

Placed at a distance from the outer surface 4 of the cutter plate 2 is straightening support 18. It consists of a straight and planar supporting surface corresponding to the straight and planar face of the outer surface, so that a gap of uniform width is formed between these two surfaces 4 and 18. The piece to be cut off goes into this gap during the cutting, and at the end of the cutting action the piece, which has been slightly bent out of shape during the cutting, is pressed between the surfaces 4 and 18, being thus straightened. Fig. 2 does not show the straightening support.

Fig. 3 shows another embodiment of the cutting boss. In this case, the cutting boss 14 is capable of springing motion in the vertical direction, achieved using e.g. a sufficiently rigid mechanical spring. In this embodiment, too, the upper edge of the cutting boss 14 in its rest position lies somewhat below the level determined by the supporting frame. Fig. 4 shows an embodiment in which the cutting boss 15 capable of vertical springing motion is so disposed in its rest position that its upper surface lies substantially flush with the upper surface of the supporting frame 1.

Fig. 5 presents a more detailed view of a cutter plate 2, also illustrating its cutting action. The cutter plate 2 comprises a straight and planar inner surface 3 facing towards the rough-cast bar 9 and an outer surface 4 facing towards the piece 16 to be cut off. The inner surface 3 and the outer surface 4 of the cutter plate 2 are connected at the lower end by a cutter 5, which comprises the lowest part or cutting edge 6 of the cutter plate. The cutting edge 6 is located at a distance from the plane determined by the inner surface 3 of the cutter plate outward towards the outer surface 4, with a connecting surface 7 between the cutting edge 6 and the inner surface 3. In the embodiment in Fig. 5, the connecting surface is a straight surface at an obtuse angle to the inner surface 3 while the cutting edge 6 forms a sharp angle between the connecting surface 7 and the outer surface 4.

The outer surface 4 starts from the cutting edge 6 as a substantially straight and planar surface at an oblique angle in a direction away from the inner surface 3 so that the cutter plate 2 thickness increases with a low gradient until, at a distance from the cutting edge 6, the outer surface 4 turns more steeply outwards and then back to a more gentle obliquity, forming a rounded protrusion 8.

The cutting action illustrated by Fig. 5 is as follows. When the cutter plate 2 is pressed into a rough-cast aluminium bar 9, a substantial equilibrium of forces prevails on both sides of the cutting edge 6, so that the cutter proceeds evenly and straight through the metal without being deformed, cutting off a piece 16 of uniform thickness. This is due to the fact that, on the inner side of the cutting edge 6, a force F_{y} perpendicular to the movement of the cutter plate is applied via the connecting surface 7 to the cutter plate 2, which force is slightly smaller than the opposite forces applied to the outer surface 4 of the cutter plate. In the case of Fig. 5, these forces acting in opposite directions consist of a force Fᵤ₁ acting near the cutting edge 6 and a force Fᵤ₂ applied to the area of the protrusion 8. Depending on the shape of the outer surface 4, the cutter plate may have only one area where the force Fᵤ is applied, as in the case of Fig. 1, or several such areas.

As the forces applied to the cutter plate in a direction transverse to the cutting direction are roughly in balance and only a slight force presses the cutter plate against the back support 10 shown in Fig. 1, no forces deforming the cutter plate are applied to it. Therefore, the cutter proceeds evenly and straight through the rough-cast bar, cutting off a piece of a precisely uniform thickness from the bar.

At the final stage of the cutting action, as a result of the cutter pressure, the lower edge 17 of the rough-cast bar tends to bend downward over the edge of the supporting frame 1. However, the cutting boss 12 prevents the bar material from being pressed too far down as this would, at least in the case of aluminium, damage the metal structure to a degree that, in certain applications, would restrict the use of that part or the piece cut off. Thus, the cutting boss 12 receives the lower corner 17 of the rough-cast bar and, being mounted at a level lower than the supporting frame 1 or pressed down past the supporting frame level by the force of the cutter 5, it permits the cutter to move down below the level of the supporting frame 1, thus ensuring that the piece 16 is neatly cut off from the rough-cast bar.

Fig. 6 shows another cutter plate 2 which may be used in the cutting device of the invention, in which the straight and planar inner surface 3 turns at an obtuse angle into a straight and planar connecting surface 7, which ends at a sharp cutting edge, from where the outer surface 4 extends upwards with a round curvature in a direction away from the inner surface 3, increasing the thickness of the cutter plate upwards from the edge.

Fig. 7 shows a third embodiment, in which the straight and planar inner surface changes through a round curvature into a connecting surface 7, which ends at a sharp cutting edge 6, from where a straight and planar outer surface 4 starts in an oblique direction away from the inner surface 3.

Fig. 8 shows a fourth embodiment, in which the straight and planar inner surface changes through a round curvature into a connecting surface 7 and through a further round curvature into an outer surface 4, the cutting edge 6 of the cutter plate 2 being the lowest point on the round curvature of the cutter plate.

Let it be stated that in practice, in the case of a rounded connecting surface, the radius of its curvature is preferably of the order of 0.5 mm, and in the case of a straight planar connecting surface, its length is preferably between 0.05 - 0.5 mm, e.g. about 0.2 mm, its width being naturally equal to the width of the cutter plate itself, which may vary according to the thickness of the rough-cast bar to be cut in each case.

The invention has been described above by the aid of examples and drawings, but different embodiments of the invention are possible within the framework of the inventive idea defined by the claims.

## Claims

1. Cutting device for the cutting of a metal bar into thin plate-like pieces, said cutting device comprising a supporting frame (1), which supports the metal bar (9) to be cut, and a cutter plate (2) substantially transverse to the metal bar for carrying out the cutting, said cutter plate comprising a straight and planar inner surface (3) oriented in a direction parallel to the face to be cut at the end of the metal bar, an outer surface (4) on the side facing towards the piece (16) to be cut off, and a cutter (5) connecting the inner and outer surfaces and provided with a cutting edge (6), **characterized in that** the cutting edge (6) of the cutter (5) is at a distance from the plane determined by the inner surface (3) of the cutter plate towards the outer surface (4), so that there is between the inner surface and the cutting edge a connecting surface (7) deviating from the direction of the inner surface.

2. Cutting device as defined in claim 1, **characterized in that** the cutting edge (6) is sharp.

3. Cutting device as defined in claim 1, **characterized in that** the cutting edge (6) has a rounded shape.

4. Cutting device as defined in claim 1, **characterized in that** the connecting surface (7) is a straight surface.

5. Cutting device as defined in claim 1, **characterized in that** the connecting surface (7) is a curved surface.

6. Cutting device as defined in claim 1, **characterized in that** the outer surface (4), starting from the cutting edge (6), is directed obliquely away from the inner surface (3) so that the thickness of the cutter plate (2) increases with the distance from the cutting edge.

7. Cutting device as defined in claim 1, **characterized in that** the cutter plate (2) has a protrusion (8) in its outer surface at a distance from the cutting edge, which protrusion effectively turns the piece being cut off in a direction away from the cutter plate.

8. Cutting device as defined in claim 7, **characterized in that** the protrusion, (8) is located at a distance from the cutting edge (6) which, in use, equals 2 - 8, preferably 3 - 5 times the thickness of the piece to be cut off.

9. Cutting device as defined in claim 7, **characterized in that** the protrusion (8) consists of a bulge with a regular outward curvature in the outer surface (4).

10. Cutting device as defined in claim 1, **characterized in that** the connecting surface (7) and the outer surface (4) are so shaped and designed that a force F_{y} perpendicular to the direction of the inner surface (3) applied by the metal bar to the connecting surface (7) during cutting is smaller than an opposite force Fᵤ applied by the metal bar to the outer surface (4).

11. Cutting device as defined in claim 10, **characterized in that** Fᵤ < 1.25F_{y}.

12. Cutting device as defined in claim 10, **characterized in that** Fᵤ ≈ 1.05F_{y}.

13. Cutting device as defined in claim 10, **characterized in that** the cutting device comprises a back support (10) parallel to the cutter plate (2), in use, the cutter plate being pressed against said back support with a force equal to the difference between the magnitudes of forces Fᵤ and F_{y}.

14. Cutting device as defined in any one of claims 1 - 3, **characterized in that** it comprises a cutting boss (12, 14, 15) located under the piece to be cut off, designed to prevent the piece from being torn off from the metal bar.

15. Cutting device as defined in claim 14, **characterized in that** the cutting boss (12) is immovable and located at a distance below the lower surface of the metal bar.

16. Cutting device as defined in claim 14, **characterized in that** the cutting boss (14, 15) is capable of springing motion in the cutting direction of the cutter plate.

17. Cutting device as defined in claim 16, **characterized in that** in use, the cutting boss (15) in its rest position is at the level of the lower surface of the metal bar.

18. Cutting device as defined in claim 16, **characterized in that** in use, the cutting boss (14) in its rest position is at a distance below the lower surface of the metal bar.

19. Cutting device as defined in any one of claims 1 - 18, **characterized in that** the outer surface (4) of the cutter plate (2) is substantially straight and the cutting device comprises a straightening support (18) outside the outer surface of the cutter plate, so that the piece cut off from the metal bar is pressed between the straightening support and the outer surface of the cutter plate, being thus straightened.

20. Cutting device as defined in claim 19, **characterized in that** the straightening surface (18) is a straight planar surface parallel to the outer surface (4) of the cutter plate.

21. Cutting device as defined in any one of claims 1 - 20, **characterized in that** in use, the metal bar to be cut is one of the following: rough-cast aluminium bar, copper bar, brass bar.

22. Cutting device as defined in any one of claims 1 - 21, **characterized in that** the cutting device comprises turning elements for rotating the metal bar and the cutter plate with respect to each other during cutting.

## Patentansprüche

1. Schneidvorrichtung zum Schneiden eines Metallbalkens in dünne plattenförmige Stücke, wobei die Schneidvorrichtung einen Stützrahmen (1), der den Metallbalken (9) stützt, der geschnitten werden soll, und eine Schneidplatte (2) aufweist, die im Wesentlichen quer zu dem Metallbalken zum Durchführen des Schneidens ist, wobei die Schneidplatte eine gerade und ebene innere Fläche (3), die in eine Richtung parallel zu der zu schneidenden Seite an dem Ende des Metallbalkens orientiert ist, eine äußere Fläche (4) an der Seite, die zu dem Stück (16) weist, das abgeschnitten werden soll, und eine Schneideinrichtung (5) aufweist, die die innere und die äußere Fläche verbindet und die mit einer Schneidkante (6) versehen ist,
***dadurch gekennzeichnet, dass***
die Schneidkante (6) der Schneideinrichtung (5) an einem Abstand von der Ebene ist, die durch die innere Fläche (3) der Schneidplatte in Richtung der äußeren Fläche (4) festgelegt ist, so dass es zwischen der inneren Fläche und der Schneidkante eine Verbindungsfläche (7) gibt, die von der Richtung der inneren Fläche abweicht.

2. Schneidvorrichtung gemäß Anspruch 1,
***dadurch gekennzeichnet, dass***
die Schneidkante (6) scharf ist.

3. Schneidvorrichtung gemäß Anspruch 1,
***dadurch gekennzeichnet, dass***
die Schneidkante (6) eine abgerundete Gestalt hat.

4. Schneidvorrichtung gemäß Anspruch 1,
***dadurch gekennzeichnet, dass***
die Verbindungsfläche (7) eine gerade Fläche ist.

5. Schneidvorrichtung gemäß Anspruch 1,
***dadurch gekennzeichnet, dass***
die Verbindungsfläche (7) eine gekrümmte Fläche ist.

6. Schneidvorrichtung gemäß Anspruch 1,
***dadurch gekennzeichnet*, *dass***
die äußere Fläche (4) beginnend von der Schneidkante (6) schräg von der inneren Fläche (3) so weggerichtet ist, dass die Dicke der Schneidplatte (2) mit dem Abstand von der Schneidkante ansteigt.

7. Schneidvorrichtung gemäß Anspruch 1,
***dadurch gekennzeichnet, dass***
die Schneidplatte (2) einen Vorsprung (8) an ihrer äußeren Fläche an einem Abstand von der Schneidkante hat, wobei der Vorsprung das Stück, das abgeschnitten wird, wirksam in eine Richtung von der Schneidplatte weg dreht.

8. Schneidvorrichtung gemäß Anspruch 7,
***dadurch gekennzeichnet, dass***
der Vorsprung (8) an einem Abstand von der Schneidkante (6) angeordnet ist, der im Verwendungszustand gleich dem zwei- bis achtfachen, vorzugsweise dem drei- bis fünffachen der Dicke des Stückes ist, das abgeschnitten werden soll.

9. Schneidvorrichtung gemäß Anspruch 7,
***dadurch gekennzeichnet, dass***
der Vorsprung (8) aus einer Ausbauchung mit einer regulär nach außen gerichteten Krümmung an seiner äußeren Fläche (4) besteht.

10. Schneidvorrichtung gemäß Anspruch 1,
***dadurch gekennzeichnet, dass***
die Verbindungsfläche (7) und die äußere Fläche (4) so gestaltet und ausgelegt sind, dass eine Kraft F_{Y} senkrecht zu der Richtung der inneren Fläche (3), die durch den Metallbalken auf die Verbindungsfläche (7) während des Schneidens aufgebracht wird, kleiner als eine entgegengesetzte Kraft F_{U} ist, die durch den Metallbalken auf die äußere Fläche (4) aufgebracht wird.

11. Schneidvorrichtung gemäß Anspruch 10,
***dadurch gekennzeichnet, dass***
F_{U} < 1,25 F_{Y}.

12. Schneidvorrichtung gemäß Anspruch 10,
***dadurch gekennzeichnet, dass***
F_{U} ≈ 1,05 F_{Y}.

13. Schneidvorrichtung gemäß Anspruch 10,
***dadurch gekennzeichnet, dass***
die Schneidvorrichtung eine Rückstütze (10) aufweist, die parallel zu der Schneidplatte (2) ist, wobei die Schneidplatte in Verwendung gegen die Rückstütze mit einer Kraft gepresst wird, die der Differenz zwischen den Größen der Kräfte F_{U} und F_{Y} gleich ist.

14. Schneidvorrichtung gemäß einem der Ansprüche 1 bis 3,
***dadurch gekennzeichnet, dass***
sie einen Schneidansatz (12, 14, 15) aufweist, der unter dem Stück gelegen ist, das abgeschnitten werden soll, der ausgelegt ist, um zu verhindern, dass das Stück von dem Metallbalken abgerissen wird.

15. Schneidvorrichtung gemäß Anspruch 15,
***dadurch gekennzeichnet, dass***
der Schneidansatz (12) unbewegbar und an einem Abstand unterhalb der unteren Fläche des Metallbalkens gelegen ist.

16. Schneidvorrichtung gemäß Anspruch 14,
***dadurch gekennzeichnet, dass***
der Schneidansatz (14, 15) zu einer springenden Bewegung in der Schneidrichtung der Schneidplatte fähig ist.

17. Schneidvorrichtung gemäß Anspruch 16,
***dadurch gekennzeichnet, dass***
der Schneidansatz (15) in Verwendung an seiner Ruheposition an einem Niveau der unteren Fläche des Metallbalkens ist.

18. Schneidvorrichtung gemäß Anspruch 16,
***dadurch gekennzeichnet, dass***
der Schneidansatz (14) in Verwendung an seiner Ruheposition an einem Abstand unterhalb der unteren Fläche des Metallbalkens ist.

19. Schneidvorrichtung gemäß einem der Ansprüche 1 bis 18,
***dadurch gekennzeichnet, dass***
die äußere Fläche (4) der Schneidplatte (2) im Wesentlichen gerade ist und die Schneidvorrichtung eine Begradigungsstütze (18) außerhalb von der äußeren Fläche der Schneidplatte aufweist, so dass das von dem Metallbalken abgeschnittene Stück zwischen der Begradigungsstütze und der äußeren Fläche der Schneidplatte gepresst wird, wobei es somit begradigt wird.

20. Schneidvorrichtung gemäß Anspruch 19,
***dadurch gekennzeichnet, dass***
die Begradigungsfläche (18) eine gerade ebene Fläche ist, die parallel zu der äußeren Fläche (4) der Schneidplatte ist.

21. Schneidvorrichtung gemäß einem der Ansprüche 1 bis 20,
***dadurch gekennzeichnet, dass***
in Verwendung der Metallbalken, der geschnitten werden soll, einer der folgenden ist: ein Rohguss-Aluminiumbalken, ein Kupferbalken, ein Messingbalken.

22. Schneidvorrichtung gemäß einem der Ansprüche 1 bis 21,
***dadurch gekennzeichnet, dass***
die Schneidvorrichtung Wendeelemente zum Drehen des Metallbalkens und der Schneidplatte bezüglich einander während des Schneidens aufweist.

## Revendications

1. Dispositif de coupe pour couper une barre métallique en pièces minces ayant la forme d'une tôle, ledit dispositif de coupe comprenant un bâti de support (1), qui supporte la barre métallique (9) à couper, et une plaque découpeuse (2) essentiellement transversale par rapport à la barre métallique afin d'effectuer la coupe, ladite plaque découpeuse comprenant une surface intérieure droite et plane (3) orientée parallèlement à la face à couper au niveau de l'extrémité de la barre métallique, une surface extérieure (4) sur le côté faisant face à la pièce (16) à couper, et un couteau (5) joignant les surface intérieure et extérieure et muni d'un bord coupant (6), **caractérisé en ce que** le bord coupant (6) du couteau (5) se trouve à une distance du plan déterminé par la surface intérieure (3) de la plaque découpeuse vers la surface extérieure (4), de sorte qu'il se trouve entre la surface intérieure et le bord coupant une surface de jonction (7) déviant de la direction de la surface intérieure.

2. Dispositif de coupe selon la revendication 1, **caractérisé en ce que** le bord coupant (6) est tranchant.

3. Dispositif de coupe selon la revendication 1, **caractérisé en ce que** le bord coupant (6) présente une forme arrondie.

4. Dispositif de coupe selon la revendication 1, **caractérisé en ce que** la surface de jonction (7) est une surface droite.

5. Dispositif de coupe selon la revendication 1, **caractérisé en ce que** la surface de jonction (7) est une surface courbée.

6. Dispositif de coupe selon la revendication 1, **caractérisé en ce que** la surface externe (4), partant du bord coupant (6), s'écarte de façon oblique de la surface intérieure (3) de sorte que l'épaisseur de la plaque découpeuse (2) augmente avec la distance la séparant du bord coupant.

7. Dispositif de coupe selon la revendication 1, **caractérisé en ce que** la plaque découpeuse (2) présente une saillie (8) sur sa surface extérieure, à une certaine distance du bord coupant, et cette saillie permet de faire tourner la pièce dans une direction en l'écartant de la plaque découpeuse.

8. Dispositif de coupe selon la revendication 7, **caractérisé en ce que** la saillie (8) se situe à une certaine distance du bord coupant (6), qui, lors de l'utilisation, est égal à 2 à 8 fois, de préférence 3 à 5 fois l'épaisseur de la pièce à couper.

9. Dispositif de coupe selon la revendication 7, **caractérisé en ce que** la saillie (8) consiste en un renflement ayant une courbure régulière, dirigée vers l'extérieur sur la surface extérieure (4).

10. Dispositif de coupe selon la revendication 1, **caractérisé en ce que** la surface de jonction (7) et la surface extérieure (4) sont formées et conçues de manière qu'une force F_{y} perpendiculaire à la direction de la surface intérieure (3) appliquée par la barre métallique à la surface de jonction (7) pendant la coupe est inférieure à une force opposée Fᵤ appliquée par la barre métallique sur la surface extérieure (4).

11. Dispositif de coupe selon la revendication 10, **caractérisé en ce que** Fᵤ < 1,25 F_{y}.

12. Dispositif de coupe selon la revendication 10, **caractérisé en ce que** Fᵤ ≈ 1,25 Fy.

13. Dispositif de coupe selon la revendication 10, **caractérisé en ce que** le dispositif de coupe comprend un support arrière (10) parallèle à la plaque découpeuse (2), lors de l'utilisation, la plaque découpeuse étant appuyée contre ledit support arrière, avec une force égale à la différence entre les grandeurs des forces Fᵤ et F_{y}.

14. Dispositif de coupe selon l'une quelconque des revendication 1 à 3, **caractérisé en ce qu'**il comprend un bossage de coupe (12, 14, 15) placé sous la pièce à découper, conçu pour empêcher que la pièce ne soit arrachée de la barre métallique.

15. Dispositif de coupe selon la revendication 14, **caractérisé en ce que** le bossage de coupe (12) est inamovible et placé à une certaine distance au-dessous de la surface inférieure de la barre métallique.

16. Dispositif de coupe selon la revendication 14, **caractérisé en ce que** le bossage de coupe (14, 15) peut effectuer un mouvement de ressort dans la direction de coupe de la plaque découpeuse.

17. Dispositif de coupe selon la revendication 16, **caractérisé en ce que**, lors de l'utilisation, le bossage de coupe (15) dans sa position de repos, se trouve au niveau de la surface inférieure de la barre métallique.

18. Dispositif de coupe selon la revendication 16, **caractérisé en ce que**, lors de l'utilisation, le bossage de coupe (14) dans sa position de repos se trouve à une certaine distance au-dessous de la surface inférieure de la barre métallique.

19. Dispositif de coupe selon l'une quelconque des revendications 1 à 18, **caractérisé en ce que** la surface extérieure (4) de la plaque découpeuse (2) est essentiellement droite et **en ce que** le dispositif de coupe comprend un support à dresser (18) hors de la plaque découpeuse, de telle sorte que la pièce découpée de la barre métallique est prise en sandwich entre le support à dresser et la surface extérieure de la plaque découpeuse, et est ainsi dressé.

20. Dispositif de coupe selon la revendication 19, **caractérisé en ce que** la surface à dresser (18) est une surface plane droite parallèle à la surface extérieure (4) de la tôle du couteau.

21. Dispositif de coupe selon l'une quelconque des revendications 1 à 20, **caractérisé en ce que**, lors de l'utilisation, la barre métallique à couper est l'une des suivantes : barre en aluminium brut de moulage, barre en cuivre, barre en laiton.

22. Dispositif de coupe selon l'une quelconque des revendications 1 à 21, **caractérisé en ce que** le dispositif de coupe comprend des éléments tournants pour mettre en rotation la barre métallique et la plaque découpeuse l'un par rapport à l'autre pendant la coupe.
